(19) Europäisches Patentamt / European Patent Office / Office européen des brevets

(11) **EP 3 131 410 B1**

(12) **EUROPEAN PATENT SPECIFICATION**

(45) Date of publication and mention
of the grant of the patent:
**17.02.2021 Bulletin 2021/07**

(21) Application number: **15707375.0**

(22) Date of filing: **03.03.2015**

(51) Int Cl.:
*A23L 5/10* *(2016.01)*     *A47J 37/00* *(2006.01)*
*A47J 27/00* *(2006.01)*     *G05D 23/00* *(2006.01)*
*H05B 6/00* *(2006.01)*

(86) International application number:
**PCT/EP2015/054340**

(87) International publication number:
**WO 2015/135788 (17.09.2015 Gazette 2015/37)**

(54) **METHOD AND APPARATUS FOR CONTROLLING A COOKING PROCESS OF A FOOD**

KOCHPROZESSSTEUERUNG

COMMANDE DE PROCESSUS DE CUISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2014 PCT/CN2014/073238
30.05.2014 EP 14170681**

(43) Date of publication of application:
**22.02.2017 Bulletin 2017/08**

(73) Proprietor: **Koninklijke Philips N.V.
5656 AG Eindhoven (NL)**

(72) Inventors:
• **LI, Qing
NL-5656 AE Eindhoven (NL)**

• **YIN, Bin
NL-5656 AE Eindhoven (NL)**
• **KELLY, Declan Patrick
NL-5656 AE Eindhoven (NL)**
• **KARAKAYA, Koray
NL-5656 AE Eindhoven (NL)**
• **LI, Wei
NL-5656 AE Eindhoven (NL)**

(74) Representative: **Freeke, Arnold
Philips Intellectual Property & Standards
High Tech Campus 5
5656 AE Eindhoven (NL)**

(56) References cited:
**EP-A1- 0 001 396**     **EP-A2- 0 238 022**
**JP-A- S5 847 934**     **US-A1- 2013 092 682**

**Description**

FIELD OF THE INVENTION

Embodiments of the present invention generally relate to cooking process control, and particularly, to a method, apparatus, and computer program product for cooking process control based on detection of the initial status of food.

BACKGROUND OF THE INVENTION

It will be appreciated that the initial status of a certain type of food to be cooked may have some impact on the control of the cooking process. As used herein, the "initial status" refers to the status of food at or near the start of the cooking process. For example, the initial status may include whether the food is frozen or non-frozen, frozen state or degree of frozenness of the food, amount of the food, and so on forth. Generally speaking, the cooking profile or parameters should be selected at least partially based on the initial status of food. As an example, different cooking time and/or temperatures may be selected depending on whether the food is frozen.

Traditionally, the initial status of food is often judged by the human user and the cooking process is controlled based on the user selection of cooking time, cooking temperature and possibly other parameters. For example, the user may determine the initial status of a food he/she wants to cook according to some visual and/or touch cues, and then select a cooking program by operating buttons, knobs or any other mechanisms on the cooking device. However, human users especially those ordinary consumers are often incapable of accurately and quantitatively determining the initial status of various kinds of foods. As such, the cooking process would suffer from some human errors.

In order to achieve more sophisticated control to automatically select the cooking profile, several invasive or non-invasive methods have been proposed to detect the frozen/non-frozen status, for example, by sensing the initial temperature of food. Unfortunately, either invasive or non-invasive methods have disadvantages that limit their applications. For example, the invasive methods usually require contact between the detecting tool and food, which might cause destruction or contamination of the food. Non-invasive methods generally rely on sensing technologies like infrared radiation (IR) which is only able to detect the surface temperature of the food. As a result, it is difficult to predict whether the food is volumetrically, partly or entirely frozen. Moreover, due to the disadvantages such as high cost, inconvenient maintenance, and imprecision under harsh atmosphere (for example, cooking atmosphere), known solutions cannot satisfy the practical requirement of consumer cooking devices while supplying sufficient robustness for the cooking process control.

EP 0238022 A2 describes a heating apparatus for cooking cake comprising a gas sensor and weight sensor which are used to determine a total heating time.

EP 0001396 A1 describes a method of cooking meats in a microwave oven by determining the mean internal temerature of the meat which is indicative of the internal doneness of meat as a function of sensed and sampled time dependent "in situ" humidity and temperature environemtal conditions.

US 2013/0092682 A1 describes an oven comprising multiple energy sources and a cooking controller that is able to change the cooking parameters based on information received from an oven operator.

JP S58 47934 A describes a method of cooking in a high-frequency heater comprising setting a weight loss ratio based on the kind and amount of matter to be cooked, and ending cooking when the actual weight loss ratio reaches the set point.

In view of the foregoing, there is a need in the art for a more accurate and cost-effective solution for cooking process control.

SUMMARY OF THE INVENTION

In order to address the above and other potential problems, embodiments of the present invention propose a method, apparatus, and computer program product for cooking process control.

The invention is defined by the independent claims. The dependent claims define advantageous embodiments.

In one aspect, embodiments of the present invention provide a method for controlling a cooking process of a food.

The method comprises the steps of: detecting a weight change of the food due to evaporation of a first vaporizable component in the food over a first period of time; determining an initial status of the food at least partially based on the detected weight change of the food; and controlling the cooking process at least partially based on the determined initial status. Other embodiments in this regard include a corresponding computer program product for cooking process control.

In another aspect, embodiments of the present invention provide an apparatus for controlling a cooking process of a food. The apparatus comprises: a detecting unit configured to detect a weight change of the food due to evaporation of a first vaporizable component in the food over a first period of time, the first vaporizable component including water of the food; an initial status determining unit configured to determine an initial status of the food at least partially based on the detected weight change of the food; and a cooking control unit configured to control the cooking process at least partially based on the determined initial status.

These embodiments of the present invention can be implemented to realize one or more of the following advantages. In accordance with embodiments of the present invention, the initial status of a food may be determined by detecting weight change of the food due to evaporation of a vaporizable component(s), such as water, in the food. In this way, determination of the initial status can be done without contact with the food, thereby avoiding any destructions or contaminations. Additionally, since weight change of the food can be accurately detected with reliable, low-cost devices, it is possible to determine the initial status of food and control the cooking process with high accuracy while maintaining the costs at a relatively low level. Furthermore, exemplary embodiments of the present invention need little or no intervention of the users and can be applied in connection with various kinds of cooking devices.

Other features and advantages of embodiments of the present invention will also be understood from the following description of exemplary embodiments when read in conjunction with the accompanying drawings, which illustrate, by way of example, spirit and principles of the present invention.

BRIEF DESCRIPTION OF THE DRAWINGS

The details of one or more embodiments of the present invention are set forth in the accompanying drawings and the description below. Other features, aspects, and advantages of the invention will become apparent from the description, the drawings, and the claims, wherein:

Fig. 1 is a flowchart illustrating a method for controlling cooking process of a food in accordance with exemplary embodiments of the present invention;
Figs. 2A and 2B schematic diagrams illustrating thermo-gravimetric profiles for French fries and meat balls, respectively, in accordance with an exemplary embodiment of the present invention; and
Fig. 3 is a block diagram illustrating an apparatus for controlling cooking process of a food in accordance with exemplary embodiments of the present invention.

Throughout the figures, same or similar reference numbers indicates same or similar elements.

DETAILED DESCRIPTION OF EMBODIMENTS

In general, embodiments of the present invention provide a method, apparatus, and computer program product for cooking process control. One of the core inventive ideas of the present invention is to determine the initial status of food by detecting the weight change of water or any other vaporizable components within the food during a certain period of time. Since the weight change can be measured in various reliable and low-cost manners, embodiments of the present invention provide an accurate and cost-effective manner for determining the initial status of food (for example, frozen/non-frozen, amount of the food, and so forth) and to control the cooking process accordingly.

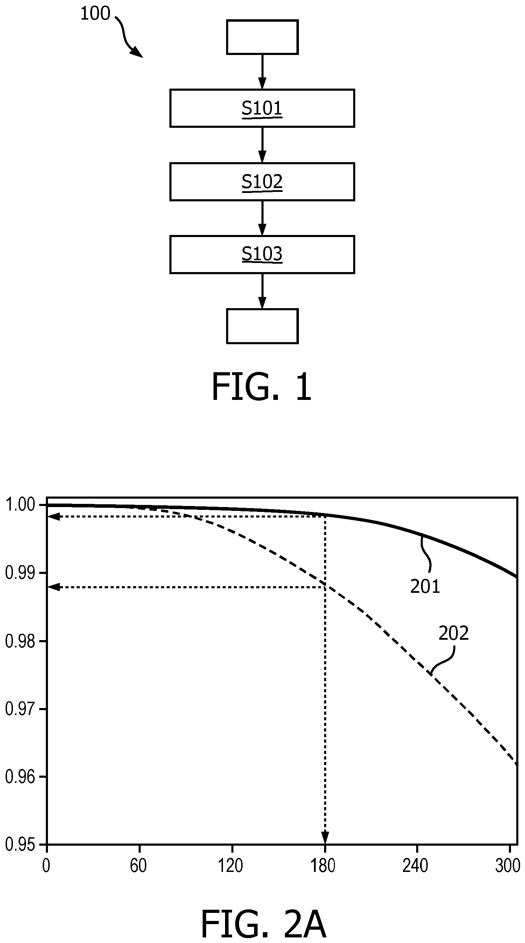

Reference is now made to Fig. 1, where a flowchart of a method 100 for controlling the cooking process in accordance with exemplary embodiments of the present invention is shown.

At step S101, weight change of a first vaporizable component in the food is detected over a first period of time. As used herein, the "vaporizable component(s)" refers to any components that may evaporate from the food under a certain condition(s). For example, in some embodiments, the vaporizable component may be water in the food. As known, water will evaporate as the temperature increases, for example, when the food is being heated. Alternatively or additionally, it is possible to detect the weight change of any other suitable vaporizable components in the food such as vaporizable grease and the so on forth. Only for the purpose of illustration, in the following discussions, some exemplary embodiments will be described with reference to the water. However, it should be noted that the scope of the invention is not limited in this regard.

In some embodiments, weight change of the first vaporizable component in the food may be detected as a process separate to the cooking process. That is, in such embodiments, weight change of the first vaporizable component in the food and thus the initial status of food are detected before the cooking process starts. In this way, the entire cooking process may be controlled according to the determined initial status of the food, such that the food can be well cooked.

Alternatively, in some other embodiments, the detection of weight change of the first vaporizable component in the food as well as the determination of the initial status of food may be done as a portion of the cooking process. More specifically, in such embodiments, the first period over which weight change of the first vaporizable component in the food is detected may be an initial period of cooking time for the cooking process. As an example, initially the user may select a cooking profile or program, for example, randomly or according to personal experience or some visual/touch cues. Then in an initial period (for example, several minutes) of the cooking time, weight change of the first vaporizable component may be detected, such that the initial status of food may be determined to control the remaining cooking process. This would be advantageous in terms of the cooking time since no extra time is need.

In some embodiments, in order to facilitate detecting weight change of the first vaporizable component in the food, the food may be placed into an environment with predefined configuration. For example, the food may be placed into an oven or any other suitable cooking device with predefined humidity, temperature, and so on forth. Specifically, in some embodiments, the food may be pre-heated to speed up the evaporation of the first vaporizable component.

In accordance with embodiments of the present invention, at step S101, weight change of the first vaporizable component in the food may be detected in various manners. For example, assume that during the first period of time, evaporation of the first vaporizable component is the only reason for the weight change of food. Then according to the law of conservation of mass, the weight loss of the food is quantitatively equal to the weight of the first vaporizable component that vaporizes from the food. Accordingly, in some exemplary embodiments, weight change of the first vaporizable component in the food may be detected by measuring weight change of the food per se during the first period of time.

In accordance with embodiments of the present invention, weight change of the food in the first period of time may be detected in several cost-effective and accurate manners. For example, in some embodiments, the initial weight of the food is measured and recorded. Then the food weight may be sampled over time. The sampling of the food weight may be performed periodically (for example, every one or two minute), for example. Alternatively, the sampling may be performed continuously until sufficient data have been collected to determine the initial status. The sampling of food weight may be done, for example, by use of a weight sensor(s) or electronic balance integrated with the cooking device. Based on the samples of the food weight as well as the initial weight, a set of values for the weight change of the food may be calculated.

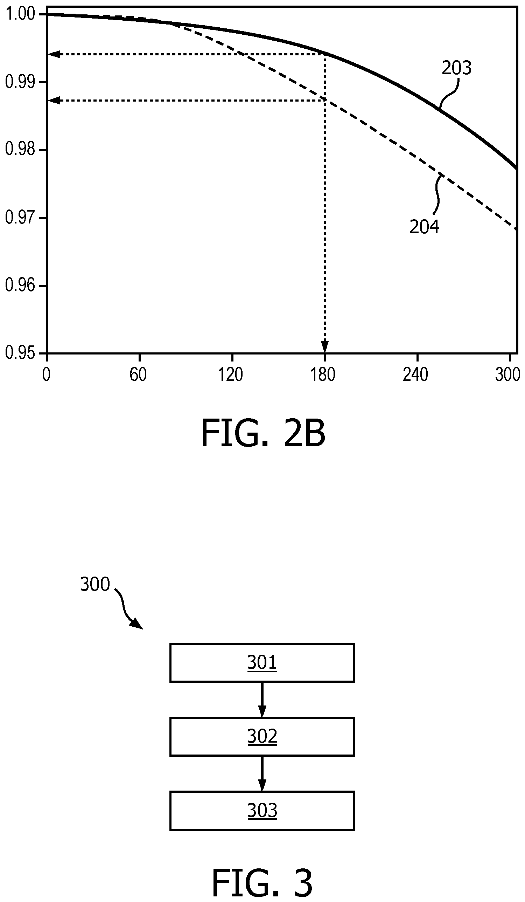

Additionally or alternatively, in some embodiments, one or more other features related to weight change of the food may be measured. As an example, in some embodiments, elapsed time upon reaching at least one predefined amount of weight change of the food may be measured. As another example, based on the set of values for the weight change of the food, it is possible to establish a thermo-gravimetric (TG) profile that characterizes weight change of the food within the first period of time. For example, the TG profile may be embodied as a curve describing weight change of the food over time, which will be discussed below with reference to Figs. 2A and 2B. In some embodiments, the TG profile may be normalized, de-noised or otherwise processed, for example. Then at least one morphological feature may be extracted from the TG profile depending on the predication model used to identify the initial status. Examples of the morphological features may include, but not limited to, derivatives of any orders, slope, gradient, and so on forth.

It should be noted that though detecting weight change of the food is an efficient manner for detecting weight change of the first vaporizable component in the food, the scope of the present invention is not limited thereto. For example, in those embodiments where the first vaporizable component is the water in the food, at step S101, weight change of the first vaporizable component in the food may be detected by detecting the change of an environment parameter(s) during the first period time. Example of such environment parameter includes, but not limited to, humidity. It would be appreciated that in a closed environment like an oven, humidity of the surrounding air will increase as the water of the food evaporates. Thus, by monitoring the change of the environmental humidity, weight change of the water may be derived. Any suitable humidity sensors, no matter currently known or developed in the future, may be utilized to detect the humidity, and the scope of the present invention is not limited in this regard.

As another example, at step S101, weight change of the first vaporizable component in the food may be detected by directly measuring the amount of the first vaporizable component that has evaporated from the food during the first period of time. For example, it is known that when the water evaporates into the air, the water molecules will rotate with alternating electromagnetic fields and transform their energy into heat. Accordingly, radio frequency (RF) radiation with suitable frequency may be used to directly detect the amount of evaporated water. Based on the detected amount of evaporated water, weight change of the water in the food may be derived.

It should be noted that in accordance with embodiments of the present invention, different technologies for detecting weight change of the first vaporizable component in the food may be used alone. Or, alternatively, two or more of them may be combined in any suitable manners. Moreover, the scope of the present invention is not limited to the examples as discussed above. Rather, any other suitable technologies, whether currently known or developed in the future, may be used to detect or evaluate weight change of the first vaporizable component in the food.

Continuing reference to Fig. 1, the method 100 then proceeds to step S102 where the initial status of food is determined at least partially based on the detected weight change of the first vaporizable component in the food.

As discussed above, the "initial status" refers to the status of food at or near the start of the cooking process. For example, the initial status may include whether the food is frozen or non-frozen, frozen state or degree of the food, amount of the food, and so on forth. As an example, the frozen states may be divided as several levels, each of which is corresponding to a range of food temperatures.

In accordance with embodiments of the present invention, the correlation between weight change of the first vaporizable component in the food (or the weight of the food in some embodiments) and the initial status of food may be established in advance. For example, in some embodiment, it is possible to simply compare the weight change of the first vaporizable component in the food with a predefined threshold(s) and then determine the initial status based on the comparison. As an example, there may be two candidate initial statuses, frozen and non-frozen. If the weight change of the first vaporizable component in the food is higher than the predefined threshold within the first period of time, then the initial status of food may be determined as frozen status. Otherwise, if such weight change is below the threshold, the initial status of food may be determined as non-frozen status.

In order to implement more sophisticated control of the cooking process, in some embodiments, the correlation between weight change of the first vaporizable component in the food and the initial status of food may be characterized by a prediction model(s). Generally speaking, the prediction model may be considered as a classifier for identifying the initial status of food based on one or more features related to weight change of the first vaporizable component in the food which may include, for example, one or more features representing the weight change of the food. As discussed above, the required features are collected at step S101 and may include, but not limited to, values for the weight change or its rate of the first vaporizable component in the food at one or more time instants, the time that has elapsed before reaching a pre-determined amount of weight change, or any other features extracted from the TG profile established in training. These features may be used as input to the prediction model at step S 1 02 to obtain a predicted initial status of the food.

In some exemplary embodiments, the prediction model may predict the initial temperature of the food based on the input one or more features. Then the frozen status and possibly the specific frozen level of the food may be determined based on the predicted temperature. Alternatively, in some embodiments, the prediction model may directly map the extracted feature(s) to an initial status of food.

In accordance with embodiments of the present invention, any suitable prediction models may be applied to determine the initial status of food. Example of the prediction models include, but not limited to, statistical models such Hidden Markov Model (HMM) and support vector machine (SVM), artificial neural network, or any other suitable prediction models. The prediction model may be trained in advance, and in some embodiments, may be refined in use.

Specifically, in some embodiments, the predication model may be established and trained with respect to individual types of foods. That is, different prediction models will be used for different types of foods. This would be beneficial to improve the accuracy of the initial status prediction since it is known that the evaporation properties might be different for different types of foods. Accordingly, in some embodiments, determining the initial status of food may comprise obtaining the food type. In some embodiments, the food type may be specified by the user. For example, the user may use mechanisms on the cooking device to select or otherwise specify the food type. Alternatively, the food type may be automatically identified, for example, by means of suitable sensors, machine visions, or pattern recognition technology. As an example, in some embodiments, one or more images of the food may be acquired and analyzed to recognize the shape or other features of the food to thereby determine the food type.

In those embodiments where the food type is obtained, the initial status of food may be determined from the prediction model based on the weight change of the first vaporizable component in the food as detected at step S101 and from the obtained food type. More specifically, a prediction model that is designed for the selected food type may be selected. Then one or more features related to weight change of the first vaporizable component in the food are input to the selected prediction model to determine the initial status.

It should be noted that though obtaining and utilizing the food type would be beneficial in some embodiments, this is not necessarily performed. For example, for those special cooking device which is designed to cook similar types of foods, a single prediction model is enough and thus there is no need to obtain the food type. Therefore, in some embodiments, the step of obtaining food type may be omitted.

As shown in Fig. 1, at step SI03, the cooking process is controlled at least partially based on the determined initial status of the food. In general, the cooking profile or one or more parameters thereof for the cooking process may be adjusted according to the determined initial status. For example, the cooking time, temperature, and/or any other relevant parameters or settings may be adapted. In some embodiments, the cooking profile for each initial status of food may be predefined. Only for the purpose of illustration, the following table shows an example.

| Initial status | Cooking profile |
|---|---|
| Frozen | 16 minutes, at 200°C |
| Non-frozen | 12 minutes, at 200°C |

As discussed above, in some embodiments, determination of the initial status may be performed prior to the cooking process. Accordingly, in these embodiments, the cooking process may be controlled, from the very beginning, to utilize the cooking profile corresponding to the determined initial status. Alternatively, the initial status may also be determined within cooking process. That is, the first period of time for the initial status determination is an initial period of the cooking time, such as the first several minutes. In these embodiments, if it is found that the initial cooking profile is not suitable for the determined initial status, then at step S103, the cooking profile or its parameter(s) for the remaining cooking process may be adjusted. On the other hand, if the initial cooking profile selected by the user is exactly the one corresponding to the determined initial status, then no adjustment is required for the remaining period of cooking time. In other words, in accordance with embodiments of the present invention, control of the cooking process includes making no change to the cooking profile.

In addition, in some embodiments, control of the cooking process at step S103 may further comprise automatically monitoring doneness or cooking-ready time for the food. To this end, change weight of a second vaporizable component in the food may be detected over a second period of time in the cooking process. In accordance with embodiments of the present invention, the second vaporizable component may or may not be the same as the first vaporizable component. For example, in some embodiments, the second vaporizable component may be the water in the food as well, and one or more of the following features may be detected for at least one time instant within the second period of time: moisture loss, rate of moisture loss; change of moisture loss rate, and so on forth. The weight change of the second vaporizable component in the food may be detected in similar manners as discussed above with respect to the first vaporizable component and thus will not be repeated.

Based on the detected weight change of the second vaporizable component in the food as well as the initial status as determined at step S102, the doneness and cooking-ready time for the food may be determined. For example, for a certain type of food in a given initial status, it may be determined that the food is well-done when the moisture loss reaches a predefined value. Furthermore, in some embodiment, the user is allowed to select the doneness level (for example, light, medium, and well-done) he/she desires. A model may be used to characterize the correlation between each of the possible doneness levels and weight change of the second vaporizable component in the food (or the weight change of the food in some embodiments). Then, based on the detected weight change of the second vaporizable component in the food over the second period of time, the cooking process may be controlled to reach the doneness level desired by the user.

Only for the purpose of illustration, an example will now be discussed. In this example, the foods to be cooked include French fries and meat balls. An electronic balance is used for weight measurement and a thermometer is used to measure initial temperature of the foods before frying. The foods are placed into a food basket and at the same time, the initial weight is recorded. As the frying proceeds, the weight of foods is detected and recorded. Conditions in this example are listed below (for both French fries and meat balls):

Initial status: frozen, non-frozen
Initial weight: 300g, 300g, 500g
Frying temperature: 200°C
Total frying time: about 20 minutes

Fig. 2A shows TG profiles 201 and 202 established for frozen and non-frozen French fries when heated in Air Fryer. Specifically, in Fig. 2A, the curve 201 represents the TG profiles for French fries in frozen states, while the curve 202 represents the TG profiles for French fries in non-frozen states. As described above, a TG profile describes the weight change of the food over time. Likewise, in Fig. 2B, the curve 203 represents the TG profiles established for meat balls in frozen states, while the curve 204 represents the TG profiles for meat balls in non-frozen states. In Figs. 2A and 2B, the vertical axis represents the normalized weight in arbitrary units, and the horizontal axis represents the frying time in seconds.

In training, the TG profiles in form of weight change curves are normalized, de-noised and smoothed. It can be seen that the TG profiles are different for foods that are initially frozen and non-frozen. Therefore, the initial status (frozen or non-frozen) may be determined by using the features of the TG profile in combination with the initial weight of the foods. More specifically, in this example, the normalized remaining weight of the food at the 180th seconds of frying (denoted as RW) will be used to determine the initial status. The initial food weight (denoted as M), as an independent predictor variable, is also taken into account. In this example, the prediction model characterizes the correlation between the initial temperature (denoted as T) of foods and the two independent variables, RW and M, as follows:

$$T = a*RW + b*M + c*RW*M + d$$

where a, b, c, and d represent parameters. Through training the prediction model by linear regression based on collected training data, values of the parameters are derived as follows:

| Parameters | French fries | Meat ball |
|------------|--------------|-----------|
| a | -1.1316E+03 | -2.2060E+03 |
| b | -1.8219E-01 | 1.8667E+00 |
| c | 2.1701E-01 | -1.8249E+00 |
| D | 1.1110E+03 | 2.1518E+03 |

In detecting the initial status, values of the variables M and RW are detected and input into the prediction model to thereby obtain a predicted initial temperature T. Then categorization of the initial status may be done according to the pre-defined temperature intervals. For example, if the value of T is below or equal to the threshold of 0°C, the initial status of food may be determined as frozen. If the estimated value of T is higher than 0°C, the initial status of food may be determined as non-frozen. Experimental results show that the initial status of foods can be correctly identified.

Fig. 3 shows a block diagram of an apparatus for controlling cooking process of a food in accordance with embodiments of the present invention. As shown, the apparatus 300 comprises: a first detecting unit 301 configured to detect a weight change of a first vaporizable component in the food over a first period of time, the first vaporizable component including water in the food; an initial status determining unit 302 configured to determine an initial status of the food at least partially based on the detected weight change of the first vaporizable component in the food; and a cooking control unit 303 configured to control the cooking process at least partially based on the determined initial status of the food.

In some embodiments, the first detecting unit 301 may comprise at least one of: a food weight detecting unit configured to detect a weight change of the food during the first period of time; an environmental parameter detecting unit configured to detect a change of an environmental parameter during the first period of time, the environment parameter including humidity; and a component weight detecting unit configured to detect amount of the first vaporizable component that evaporates from the food during the first period of time.

In some embodiments, the food weight detecting unit may comprise at least one of: a weight sampling unit configured to sample the weight change of the food for at least one time instant within the first period of time; a time determining unit configured to determine elapsed time upon reaching at least one predefined amount of the weight change of the food; and a feature extracting unit configured to extract at least one morphological feature from a thermo-gravimetric profile that characterizes the weight change of the food over the first period of time.

In some embodiments, the first period of time may be an initial period of cooking time for the cooking process. In these embodiments, the cooking control unit 303 may be configured to adapt, at least partially based on the determined initial status of the food, the cooking process in a remaining period of the cooking time.

In some embodiments, the food may be placed in an environment with a predefined configuration to facilitate the detecting of the weight change of the first vaporizable component.

In some embodiments, the apparatus 300 may further comprises a food type obtaining unit configured to obtain a type of the food. In these embodiments, the initial status determining unit 301 may be configured to determine the initial status of the food from a predefined prediction model based on the detected weight change of the first vaporizable component in the food and from the obtained type of the food.

In some embodiments, the apparatus 300 may further comprises: a second detecting unit configured to detect a weight change of a second vaporizable component in the food over a second period of time in the cooking process; and a doneness determining unit configured to determine doneness of the food based on the detected weight change of the second vaporizable component in the food.

It should be noted that the apparatus 300 may be implemented as hardware, software/firmware, or any combination thereof. In some embodiments, one or more units in the apparatus 300 may be implemented as software modules. For example, embodiments of the present invention may be embodied as a computer program product that is tangibly stored on a non-transient computer-readable medium. The computer program product comprises machine executable instructions which, when executed, cause the machine to perform steps of the method 100. Alternatively or additionally, some or all of the units in the apparatus 300 may be implemented using hardware modules like integrated circuits (ICs), application specific integrated circuits (ASICs), system-on-chip (SOCs), field programmable gate arrays (FPGAs), and so on forth. Moreover, in some embodiments, the apparatus 300 may be integrated into the cooking device. Alternatively, the apparatus 300 may operate as a separate device.

In general, the various exemplary embodiments may be implemented in hardware or special purpose circuits, software, logic or any combination thereof. Some aspects may be implemented in hardware, while other aspects may be implemented in firmware or software which may be executed by a controller, microprocessor or other computing device. While various aspects of the exemplary embodiments of the present invention are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

In the context of the present invention, a machine readable medium may be any tangible medium that can contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Computer program code for carrying out methods of the present invention may be written in any combination of one or more programming languages. These computer program codes may be provided to a processor of a general purpose computer, special purpose computer, or other programmable data processing apparatus, such that the program codes, when executed by the processor of the computer or other programmable data processing apparatus, cause the functions/operations specified in the flowcharts and/or block diagrams to be implemented. The program code may execute entirely on a computer, partly on the computer, as a stand-alone software package, partly on the computer and partly on a remote computer or entirely on the remote computer or server.

**Claims**

1.  A method (100) of controlling a cooking process of a food, the method comprising steps of:

    - detecting (S101) a weight change of the food due to evaporation of a first vaporizable component in the food over a first period of time;
    - determining (S102) an initial status of the food at least partially based on the detected weight change of the food; and
    - controlling (S103) the cooking process at least partially based on the determined initial status of the food.

2.  The method according to Claim 1, wherein the step of detecting (S101) the weight change of the food comprises at least one step of:

    - detecting the weight change of the food based on an initial weight of the food and a further weight of the food sampled during the first period of time;
    - detecting a change of an environmental parameter during the first period of time, the environment parameter including humidity; and
    - detecting an amount of the first vaporizable component that evaporates from the food during the first period of time.

3.  The method according to Claim 2, wherein the step of detecting the weight change of the food comprises at least one step of:

    - sampling the weight change of the food for at least one time instant within the first period of time;
    - determining elapsed time upon reaching at least one predefined amount of the weight change of the food; and
    - extracting at least one morphological feature from a thermo-gravimetric profile that characterizes the weight change of the food over the first period of time.

4.  The method according to any of Claims 1 to 3, wherein the first period of time is an initial period of cooking time for the cooking process, and wherein the step of controlling (S103) the cooking process comprises a step of adapting, at least partially based on the determined initial status of the food, the cooking process in a remaining period of the cooking time.

5.  The method according to any of Claims 1 to 3, wherein the food is placed in an environment with a predefined configuration for the step of detecting (S101) a weight change.

6.  The method according to any of Claims 1 to 3, wherein the step of determining (S102) the initial status of the food comprises steps of:

    - obtaining a type of the food; and
    - determining the initial status of the food from a predefined prediction model based on the detected weight change of the first vaporizable component in the food and from the obtained type of the food.

7.  The method according to any of Claims 1 to 3, wherein the step of controlling (S103) the cooking process comprises steps of:

    - detecting a further weight change of the food due to evaporation of a second vaporizable component in the food over a second period of time in the cooking process; and
    - determining doneness of the food based on the detected further weight change of the food.

8.  An apparatus (300) for controlling a cooking process of a food, the apparatus comprising:

    - a first detecting unit (301) configured to detect a weight change of the food due to evaporation of a first vaporizable component, such as water, in the food over a first period of time;
    - an initial status determining unit (302) configured to determine an initial status of the food at least partially based on the detected weight change of the food; and
    - a cooking control unit (303) configured to control the cooking process at least partially based on the determined initial status of the food.

9.  The apparatus according to Claim 8, wherein the first detecting unit (301) comprises at least one of:

    - a food weight detecting unit configured to detect a weight change of the food during the first period of time;
    - an environmental parameter detecting unit configured to detect a change of an environmental parameter during the first period of time, the environment parameter including humidity; and
    - a component weight detecting unit configured to detect an amount of the first vaporizable component that evaporates from the food during the first period of time.

10. The apparatus according to Claim 9, wherein the food weight detecting unit comprises at least one of:

- a weight sampling unit configured to sample the weight change of the food for at least one time instant within the first period of time;
- a time determining unit configured to determine elapsed time upon reaching at least one predefined amount of the weight change of the food; and
- a feature extracting unit configured to extract at least one morphological feature from a thermo-gravimetric profile that characterizes the weight change of the food over the first period of time.

11. The apparatus according to any of Claims 8 to 10, wherein the first period of time is an initial period of cooking time for the cooking process, and wherein the cooking control unit (303) is configured to adapt, at least partially based on the determined initial status of the food, the cooking process in a remaining period of the cooking time.

12. The apparatus according to any of Claims 8 to 10, wherein the food is placed in an environment with a predefined configuration for the detecting.

13. The apparatus according to any of Claims 8 to 10, further comprising:

- a food type obtaining unit configured to obtain a type of the food,

wherein the initial status determining unit (302) is configured to determine the initial status of the food from a predefined prediction model based on the detected weight change of the first vaporizable component in the food and from the obtained type of the food.

14. The apparatus according to any of Claims 8 to 10, further comprising:

- a second detecting unit configured to detect a further weight change of the food due to evaporation of a second vaporizable component in the food over a second period of time in the cooking process; and
- a doneness determining unit configured to determine doneness of the food based on the detected further weight change of the food.

15. A computer program product for controlling a cooking process of a food, the computer program product being tangibly stored on a non-transient computer-readable medium and comprising machine executable instructions which, when executed, cause the machine to perform steps of the method (100) according to any of Claims 1 to 7.

**Patentansprüche**

1. Eine Methode (100) zum Steuern des Kochvorgangs eines Nahrungsmittels, wobei die Methode folgende Schritte umfasst:

- Ermitteln (S101) der Gewichtsveränderung des Lebensmittels aufgrund des Verdampfens einer ersten verdampfbaren Komponente des Lebensmittels über einen ersten Zeitraum;
- Ermitteln (S102) des Anfangszustands des Lebensmittels zumindest teilweise anhand der ermittelten Gewichtsveränderung des Lebensmittels; und
- Steuern (S103) des Kochvorgangs zumindest teilweise anhand des ermittelten Ausgangszustands des Lebensmittels.

2. Die Methode gemäß Anspruch 1, wobei das Ermitteln (S101) der Gewichtsveränderung des Lebensmittels mindestens einen Schritt umfasst:

- Ermitteln der Gewichtsveränderung des Lebensmittels anhand des Anfangsgewichts sowie eines weiteren Gewichts des Lebensmittels, das im ersten Zeitraum ermittelt wurde;
- Ermitteln der Veränderung eines Umgebungsparameters im ersten Zeitraum, wobei der Umgebungsparameter die Feuchtigkeit einschließt; und
- Ermitteln der Menge der ersten verdampfbaren Komponente, die während des ersten Zeitraums aus dem Lebensmittel verdampft.

3. Die Methode gemäß Anspruch 2, wobei das Ermitteln der Gewichtsveränderung des Lebensmittels mindestens einen Schritt umfasst:

- Erfassen der Gewichtsveränderung des Lebensmittels für mindestens einen Zeitpunkt innerhalb des ersten Zeitraums;
- Ermitteln der bis zum Erreichen mindestens eines vorab festgelegten Gewichtsveränderungsbetrags des Lebensmittels verstrichenen Zeit; und
- Extrahieren mindestens eines morphologischen Merkmals aus einem thermogravimetrischen Profil, das die Gewichtsveränderung des Lebensmittels über den ersten Zeitraum charakterisiert.

**4.** Die Methode gemäß einem der Ansprüche 1 bis 3, wobei es sich beim ersten Zeitraum um den Anfangszeitraum der Kochzeit des Kochvorgangs handelt, und
wobei das Steuern (S103) des Kochvorgangs das Anpassen des Kochvorgangs für den verbleibenden Zeitraum der Kochzeit umfasst, das zumindest teilweise auf dem ermittelten Anfangszustand des Lebensmittels beruht.

**5.** Die Methode gemäß einem der Ansprüche 1 bis 3, wobei das Lebensmittel in einer Umgebung mit einer vorab festgelegten Konfiguration für das Ermitteln (S101) der Gewichtsveränderung platziert wird.

**6.** Die Methode gemäß einem der Ansprüche 1 bis 3, wobei das Ermitteln (S102) des Anfangszustands des Lebensmittels folgende Schritte umfasst:

- Abrufen der Lebensmittelart; und
- Ermitteln des Anfangszustands des Lebensmittels anhand eines vorab festgelegten Vorhersagemodells, das auf der ermittelten Gewichtsveränderung der ersten verdampfbaren Komponente des Lebensmittels sowie der abgerufenen Lebensmittelart beruht.

**7.** Die Methode gemäß einem der Ansprüche 1 bis 3, wobei das Steuern (S103) des Kochvorgangs folgende Schritte umfasst:

- Ermitteln einer weiteren Gewichtsveränderung des Lebensmittels aufgrund des Verdampfens einer zweiten verdampfbaren Komponente des Lebensmittels über einen zweiten Zeitraum des Kochvorgangs; und
- Ermitteln des Garheitsgrads des Lebensmittels anhand der ermittelten weiteren Gewichtsveränderung des Lebensmittels.

**8.** Ein Gerät (300) zum Steuern des Kochvorgangs eines Lebensmittels, wobei das Gerät Folgendes umfasst:

- eine erste Erkennungseinheit (301) zum Ermitteln der Gewichtsveränderung des Lebensmittels aufgrund des Verdampfens einer ersten verdampfbaren Komponente des Lebensmittels wie z. B. Wasser über einen ersten Zeitraum;
- eine Anfangszustand-Erkennungseinheit (302) zum Ermitteln des Anfangszustands des Lebensmittels zumindest teilweise anhand der ermittelten Gewichtsveränderung des Lebensmittels; und
- eine Kochsteuerungseinheit (303) zum Steuern des Kochvorgangs zumindest teilweise anhand des ermittelten Ausgangszustands des Lebensmittels.

**9.** Das Gerät gemäß Anspruch 8, wobei die erste Erkennungseinheit (301) mindestens eine der folgenden Komponenten umfasst:

- eine Lebensmittel-Gewichtserfassungseinheit, die eine Gewichtsveränderung des Lebensmittels im ersten Zeitraum erkennt;
- eine Umgebungsparameter-Erkennungseinheit zum Ermitteln der Veränderung eines Umgebungsparameters im ersten Zeitraum, wobei der Umgebungsparameter die Feuchtigkeit einschließt; und
- eine Komponentengewicht-Erkennungsmethode zum Ermitteln der Menge der ersten verdampfbaren Komponente, die während des ersten Zeitraums aus dem Lebensmittel verdampft.

**10.** Das Gerät gemäß Anspruch 9, wobei die Lebensmittelgewicht-Erkennungseinheit mindestens eine der folgenden Komponenten umfasst:

- eine Gewichtserfassungseinheit zum Erfassen der Gewichtsveränderung des Lebensmittels für mindestens einen Zeitpunkt innerhalb des ersten Zeitraums;
- eine Zeiterkennungseinheit zum Ermitteln der bis zum Erreichen mindestens eines vorab festgelegten Gewichtsveränderungsbetrags des Lebensmittels verstrichenen Zeit; und
- eine Merkmalextraktionseinheit zum Extrahieren mindestens eines morphologischen Merkmals aus einem thermogravimetrischen Profil, das die Gewichtsveränderung des Lebensmittels über den ersten Zeitraum charakterisiert.

**11.** Das Gerät gemäß einem der Ansprüche 8 bis 10, wobei es sich beim ersten Zeitraum um den Anfangszeitraum der Kochzeit des Kochvorgangs handelt, und wobei die Kochsteuerungseinheit (303) den Kochvorgang zumindest teilweise auf dem ermittelten Anfangszustand des Lebensmittels beruhend für den verbleibenden Zeitraum der Kochzeit anpasst.

**12.** Das Gerät gemäß einem der Ansprüche 8 bis 10, wobei das Lebensmittel in einer Umgebung mit einer vorab festgelegten Konfiguration für das Ermitteln platziert wird.

**13.** Das Gerät gemäß einem der Ansprüche 8 bis 10, wobei dieses zudem Folgendes umfasst:

- eine Einheit zum Abrufen der Lebensmittelart, die die Lebensmittelart abruft,
wobei die Ausgangszustand-Erkennungseinheit (302) den Anfangszustand des Lebensmittels anhand eines vorab festgelegten Vorhersagemodells ermittelt, das auf der ermittelten Gewichtsveränderung der ersten verdampfbaren Komponente des Lebensmittels sowie der abgerufenen Lebensmittelart beruht.

14. Das Gerät gemäß einem der Ansprüche 8 bis 10, wobei dieses zudem Folgendes umfasst:

- eine zweite Erkennungseinheit zum Ermitteln einer weiteren Gewichtsveränderung des Lebensmittels aufgrund des Verdampfens einer zweiten verdampfbaren Komponente des Lebensmittels über einen zweiten Zeitraum des Kochvorgangs; und
- eine Einheit zum Ermitteln des Garheitsgrads des Lebensmittels anhand der ermittelten weiteren Gewichtsveränderung des Lebensmittels.

15. Ein Computerprogrammprodukt zum Steuern des Kochvorgangs eines Lebensmittels, wobei das Computerprogrammprodukt auf einem nicht flüchtigen, von einem Computer lesbaren Medium gespeichert ist und von einer Maschine ausführbare Befehle umfasst, die die Maschine beim Ausführen dazu veranlassen, die Schritte der Methode (100) gemäß einem der Ansprüche 1 bis 7 auszuführen.

**Revendications**

1. Procédé (100) de commande d'un processus de cuisson d'un aliment, ledit procédé comprenant les étapes suivantes :

- la détection (S101) d'un changement de poids de l'aliment en raison de l'évaporation d'un premier composant vaporisable dans l'aliment pendant une première période de temps ;
- la détermination (S102) d'un état initial de l'aliment au moins partiellement en fonction du changement de poids détecté de l'aliment ; et
- la commande (S103) du processus de cuisson au moins partiellement en fonction de l'état initial déterminé de l'aliment.

2. Procédé selon la revendication 1, dans lequel l'étape de détection (S101) du changement de poids de l'aliment comprend les étapes suivantes :

- la détection du changement de poids de l'aliment en fonction d'un poids initial de l'aliment et d'un autre poids de l'aliment échantillonné pendant la première période de temps ; et/ou
- la détection d'un changement d'un paramètre environnemental pendant la première période de temps, le paramètre d'environnement comprenant l'humidité ; et/ou
- la détection d'une quantité du premier composant vaporisable, lequel s'évapore de l'aliment pendant la première période de temps.

3. Procédé selon la revendication 2, dans lequel l'étape de détection du changement de poids de l'aliment comprend les étapes suivantes :

- l'échantillonnage du changement de poids de l'aliment pendant au moins un instant dans la première période de temps ; et/ou
- la détermination du temps écoulé après avoir atteint au moins une quantité prédéfinie du changement de poids de l'aliment ; et/ou
- l'extraction d'au moins une caractéristique morphologique d'un profil thermo-gravimétrique, lequel caractérise le changement de poids de l'aliment pendant la première période de temps.

4. Procédé selon l'une quelconque des revendications 1 à 3, dans lequel la première période de temps est une période initiale de temps de cuisson pour le processus de cuisson, et dans lequel l'étape de commande (S103) du processus de cuisson comprend une étape d'adaptation, au moins partiellement en fonction de l'état initial déterminé de l'aliment, du processus de cuisson pendant une période restante du temps de cuisson.

5. Procédé selon l'une quelconque des revendications 1 à 3, dans lequel l'aliment est placé dans un environnement à une configuration prédéfinie pour l'étape de détection (S101) d'un changement de poids.

6. Procédé selon l'une quelconque des revendications 1 à 3, dans lequel l'étape de détermination (S102) de l'état initial de l'aliment comprend les étapes suivantes :

- l'obtention d'un type d'aliment ; et
- la détermination de l'état initial de l'aliment en fonction d'un modèle de prédiction prédéfini basé sur le changement de poids détecté du premier composant vaporisable dans l'aliment et en fonction du type d'aliment obtenu.

7. Procédé selon l'une quelconque des revendications 1 à 3, dans lequel l'étape de commande (S103) du processus de cuisson comprend les étapes suivantes :

- la détection d'un autre changement de poids de l'aliment en raison de l'évaporation d'un second composant vaporisable dans l'aliment pendant une seconde période de temps dans le processus de cuisson ; et
- la détermination de la cuisson de l'aliment en fonction de l'autre changement de poids détecté de l'aliment.

**8.** Appareil (300) de commande d'un processus de cuisson d'un aliment, ledit appareil comprenant :

- une première unité de détection (301) conçue pour détecter un changement de poids de l'aliment en raison de l'évaporation d'un premier composant vaporisable, tel que l'eau, dans l'aliment pendant une première période de temps ;
- une unité de détermination de l'état initial (302) conçue pour déterminer un état initial de l'aliment au moins partiellement en fonction du changement de poids détecté de l'aliment ; et
- une unité de commande de cuisson (303) conçue pour commander le processus de cuisson au moins partiellement en fonction de l'état initial déterminé de l'aliment.

**9.** Appareil selon la revendication 8, dans lequel la première unité de détection (301) comprend :

- une unité de détection du poids d'aliment conçue pour détecter un changement de poids de l'aliment pendant la première période de temps ; et/ou
- une unité de détection du paramètre environnemental conçue pour détecter un changement d'un paramètre environnemental pendant la première période de temps, le paramètre environnemental comprenant l'humidité ; et/ou
- une unité de détection du poids de composant conçue pour détecter une quantité du premier composant vaporisable, lequel s'évapore de l'aliment pendant la première période de temps.

**10.** Appareil selon la revendication 9, dans lequel l'unité de détection du poids de l'aliment comprend :

- une unité d'échantillonnage de poids conçue pour échantillonner le changement de poids de l'aliment pendant au moins un instant dans la première période de temps ; et/ou
- une unité de détermination du temps conçue pour déterminer le temps écoulé après avoir atteint au moins une quantité prédéfinie du changement de poids de l'aliment ; et/ou
- une unité d'extraction des caractéristiques conçue pour extraire au moins une caractéristique morphologique d'un profil thermo-gravimétrique, lequel caractérise le changement de poids de l'aliment pendant la première période de temps.

**11.** Appareil selon l'une quelconque des revendications 8 à 10, dans lequel la première période de temps est une période initiale du temps de cuisson pour le processus de cuisson, et dans lequel l'unité de commande de cuisson (303) est conçue pour adapter, au moins partiellement en fonction de l'état initial déterminé de l'aliment, le processus de cuisson pendant une période restante du temps de cuisson.

**12.** Appareil selon l'une quelconque des revendications 8 à 10, dans lequel l'aliment est placé dans un environnement à une configuration prédéfinie pour la détection.

**13.** Appareil selon l'une quelconque des revendications 8 à 10, comprenant en outre :

- une unité d'obtention de type d'aliment conçue pour obtenir un type d'aliment, dans lequel l'unité de détermination de l'état initial (302) est conçue pour déterminer l'état initial de l'aliment en fonction d'un modèle de prédiction prédéfini en fonction du changement de poids détecté du premier composant vaporisable dans l'aliment et du type d'aliment obtenu.

**14.** Appareil selon l'une quelconque des revendications 8 à 10, comprenant en outre :

- une seconde unité de détection conçue pour détecter un autre changement de poids de l'aliment en raison de l'évaporation d'un second composant vaporisable dans l'aliment pendant une seconde période de temps dans le processus de cuisson ; et
- une unité de détermination de la cuisson conçue pour déterminer la cuisson de l'aliment en fonction de l'autre changement de poids détecté de l'aliment.

**15.** Produit de programme informatique permettant de commander un processus de cuisson d'un aliment, ledit produit de programme informatique étant mémorisé de manière tangible sur un support lisible par ordinateur non transitoire et comprenant des instructions exécutables par machine, lesquelles, lorsqu'elles sont exécutées, amènent la machine à mettre en œuvre les étapes du procédé (100) selon l'une quelconque des revendications 1 à 7.

FIG. 1

FIG. 2A

FIG. 2B

FIG. 3

**EP 3 131 410 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0238022 A2
- EP 0001396 A1
- US 20130092682 A1
- JP S5847934 A